(19) Europäisches Patentamt
European Patent Office
Office européen des brevets

(11) Publication number: **0 025 689**
**B1**

(12) **EUROPEAN PATENT SPECIFICATION**

(45) Date of publication of patent specification: **04.04.84**

(51) Int. Cl.³: **B 32 B 17/06, B 29 D 3/02**

(21) Application number: **80303162.4**

(22) Date of filing: **09.09.80**

(54) **Fiber reinforced plastic sheet molding compound.**

(30) Priority: **12.09.79 JP 117089/79**

(43) Date of publication of application:
**25.03.81 Bulletin 81/12**

(45) Publication of the grant of the patent:
**04.04.84 Bulletin 84/14**

(84) Designated Contracting States:
**DE FR GB**

(56) References cited:
**GB - A - 1 237 457**
**GB - A - 1 547 280**
**US - A - 3 671 384**
**US - A - 3 730 808**
**US - A - 3 863 758**
**US - A - 4 141 929**

**The file contains technical information submitted after the application was filed and not included in this specification**

(73) Proprietor: **MITSUBISHI RAYON CO. LTD.**
**3-19, Kyobashi 2-chome Chuo-Ku**
**Tokyo 104 (JP)**

(72) Inventor: **Yoshioka, Naonori**
**136-79, Ohno-cho**
**Hiroshima-ken (JP)**
Inventor: **Tada, Hisashi**
**2-3-103, Kurokawa 3-chome**
**Otake-shi Hiroshima-ken (JP)**
Inventor: **Kashiyama, Setsuo**
**2-1, Kurokawa 3-chome**
**Otake-shi Hiroshima-ken (JP)**

(74) Representative: **Warden, John Christopher et al,**
**R.G.C. Jenkins & Co. 12-15, Fetter Lane**
**London EC4A 1PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Fiber reinforced plastic sheet molding compound

The present invention relates to a sheet molding compound which is useful for the production of fiber-reinforced plastic molded articles by the compression molding process or the like, and to a process for preparing the same.

A variety of molded products which had hitherto been made of metals, such as bath tubs, water tanks, automobile parts and the like, have now been made of a resin compound consisting of reinforcing fibers such as cut fibers or glass fibers and matrix resins, and it is considered that this tendency will further grow in the future. Fiber-reinforced plastic molded products are produced by the cast molding process, transfer molding process, matched-die molding process, and compression molding process.

Where this technique is applied to small intricate parts, considerable difficulty is experienced.

The molding compounds must exhibit good flowability during the molding. Therefore reinforcing fibers have had to be kept to small amounts, and it has been difficult to produce molded products of sufficient strength. In particular, the molded products have shown a markedly decreased density of reinforcing fibers at the corner portions which accounts for the reduced strength at the corner portions as compared with other portions.

Furthermore, the reinforcing cut fibers in the resin compound undergo the three-dimensional flow during the step of molding; cut fibers float on the surfaces of the fiber-reinforced plastic molded products made of the resin compound to deteriorate the appearance. In the conventional art, therefore, it was necessary to beautifully finish the surfaces of the molded products.

US—A—4 141 929 discloses a new dry, hardenable, thickened, resinous sheet molding composition containing axially aligned continuous filaments, which can be molded by the matched-die molding process. This sheet molding compound contains unidirectionally aligned reinforcing fibers and is effective for producing fiber-reinforced plastic molded products of elongated shapes such as fishing rods and pole vault poles, but is not suited for producing fiber-reinforced plastic molded products having very complicated shapes such as spinning reels, electronics apparatus container, bracket, brake cover, or gears.

It has been proposed in GB—A—1 547 280 and US—A—3 730 808 to improve the surface appearance on moulded products by using a sheet moulding compound comprising a first layer of relatively high strength joined on one or both sides with a second, relatively thinner and lower strength layer for the purpose of providing a smooth surface finish on the moulded article, the layers comprising reinforcing fibers contained in the same matrix resin. In GB—A—1 547 280, the central or high strength layer utilises relatively long fibers (at least 10 mm long) in an amount of 5 to 50% by volume. The surface layers comprise short fibers or particular filler of 3 to 40% by volume. In US—A—3 730 808 there is utilised in the central or strong layer a glass fiber mat. In both cases it is found that the deficiency mentioned above is present that particularly in corner portions or portions which are intricately formed, there is insufficient flow of reinforcement from within the central layer to provide sufficient strength.

The object of the present invention is to provide a new and useful dry, thickened resinous sheet moulding compound containing large amounts of reinforcing fibers which can be molded by various molding methods such as cast molding, transfer molding, matched-die molding and compression molding, to produce molded products containing uniformly distributed reinforcing fibers especially in intricately shaped parts which maintain good appearance.

The molding compound of the invention comprises a fiber-reinforced plastic sheet molding compound comprising a first layer formed of remolded rectangular or triangular chips of a width of 1 mm or more and a length of 3 mm or more, the chips being composed of from 30 to 90% by weight of reinforcing fibers and 70 to 10% by weight of a matrix resin, said first layer being joined on one or both sides with a second layer composed of the same matrix resin and of from 0 to 30% by weight of cut reinforcing fibres, the thickness of the second layer being less than that of the first layer.

The sheet molding compound of the present invention exhibits good flowability during the step of molding, and the reinforcing fibers flow uniformly in the same direction along the plane of the sheet. Therefore, the fiber-reinforced plastic molded articles prepared by using the sheet molding compound contain the reinforcing fibers at a uniform density to exhibit uniform strength, and exhibit very good appearance without permitting the reinforcing fiber to protrude on the surfaces of the molded articles.

Accordingly, the sheet molding compound of the present invention can be effectively used for producing fiber-reinforced plastic molded products such as fishing reels, electronics apparatus containers, brackets, brake covers, gears and automobile parts, which require such precision, uniform strength and good appearance.

In the drawings:—

Figs. 1 and 2 are perspective views illustrating a sheet molding compound of the present invention, Fig. 2 being to greater magnification;

Fig. 3 is a diagram illustrating a relation between the bending modulus of elasticity and the average length of reinforcing fibers of a molded product prepared by using the sheet molding compound of the present invention;

Fig. 4 is a diagram illustrating a relation between the bending strength and the average length of reinforcing fibers of a molded product prepared by using the sheet molding compound of the present invention;

Fig. 5 is a perspective view of an intermediate product in the form of a corrugated draining board;

Fig. 6 is a perspective view of a cylindrical product obtained by laminating the sheet molding compound of the present invention in plurality of layers; and

Fig. 7 is a cross-sectional view of a metal mold which is used for making a gear using the sheet molding compound of the present invention.

Fiber-reinforced plastic sheet molding compounds have been used over a wide field of application owing to their easy handling property. Products prepared by using fiber-reinforced sheet molding compound by heat compression molding have such defects that cut fibers appear on the surfaces of the molded product spoiling the appearance and that the strength becomes locally small. These defects appear more conspicuously as the molded porducts are produced in more complex shapes.

Techniques have heretofore been developed to eliminate such defects. First, there has been proposed a method of varying the amount of cut fibers that are added to the sheet molding compound. To eliminate the above defects by this method, however, the amount of cut fibers must be decreased, which, however, makes it difficult to obtain a desired sheet molding compound. A second method consists of adding an additive to enhance the flowability of the sheet molding compound during the step of molding. The molded products obtained by this method exhibit good appearance but insufficient strength.

The present invention deals with a fiber-reinforced plastic sheet molding compound which satisfies the above-mentioned requirements.

In Figs. 1 and 2 there is shown a sheet molding compound comprising a first layer 1 composed of 30 to 90% by weight of a reinforcing fiber and 70 to 10% by weight of a matrix resin, and a second layer 2 of a compound consisting of 70 to 100% by weight of the matrix resin and, as required, up to 30% by weight of fiber, the layer 2 having a thickness smaller than that of the layer 1 and being joined to at least one surface of the layer 1.

The layer 1 is formed of remolded rectangular or triangular chips 3 of a width of 1 mm or more.

The sheet molding compound of the present invention may be obtained by the methods which are mentioned below.

According to a first method, a nonwoven fabric composed of a reinforcing fiber of a length of greater than 1 mm is impregnated with a matrix resin to prepare a sheet, or a sheet composed of reinforcing fibers which are oriented in one direction is impregnated with a matrix resin, and the thus prepared sheet is cut into small pieces of a width of greater than 1 mm and a length of greater than 3 mm, and the pieces are remolded in a random fashion to produce a sheet-like product. A second method consists of impregnating a reinforcing fiber tow with a matrix resin, molding the tow into a tape of a width of more than 1 mm, cutting the tape into pieces of a length of greater than about 3 mm, and remolding the pieces to produce a sheet-like product.

Representative examples of reinforcing fiber which may be used for preparing the layers 1 and 2 include organic fibers such as polyester fibers, polyamide fibers, aromatic polyamide fibers and polyamideimide fibers, and inorganic fibers such as glass fibers, silicon carbide fibers, alumina fibers, titanium fibers, steel fibers, carbon fibers and graphite fibers.

The length of the reinforcing fibers should preferably be within a range of greater than 1 mm but smaller than 100 mm, so that the sheet molding compound of the present invention will exhibit good moldability and the molded products composed of the sheet molding compound will exhibit improved mechanical properties. Those of layer 1 have a length greater than 1 mm.

Fig. 2 illustrates schematically the original random arrangement of chips 3 prior to their remolding. With the sheet molding compound of the present invention, the randomly oriented fibers and the resin of the remolded chips 3 flow uniformly along the plane of the sheet during the step of molding up to the corners e.g. of a metal mold. Therefore, the density of the reinforcing fibers is not significantly reduced in the corner portions of the molded products unlike the plastic molded products composed of the prior art. Further, the material of the original chips flows in the second dimensional directions along the plane of the sheet, and not in a direction perpendicular to the plane of the sheet. Therefore, the reinforcing fibers do not appear on the surfaces of the molded product and do not spoil the appearance. Further, even using chips containing large amounts of reinforcing fiber, the material is capable of flowing easily in the sheet molding compound maintaining the original fiber arrangement in the step of molding. Accordingly the sheet molding compound is capable of forming the molded products having very high strength without loss of moldability.

The chips 3 may include a proportion of other shapes such as circular, oval or polygonal. So that the pieces can be easily prepared, however, they should preferably have a width of from 1 to 50 mm and a length of from about 3 to about 100 mm.

Figs. 3 and 4 illustrate relations in mechanical characteristics between the length of the reinforcing fiber and the molded product. Namely, Fig. 3 illustrates the relation between the length of the fiber and the bending modulus of elasticity, and Fig. 4 illustrates the relation between the length of the fiber and the bending strength. These data are based upon the average values of a three-point bending test that was conducted by preparing a box-like molded product using carbon fiber as the reinforcing fiber and an epoxy resin as the matrix, and by taking out specimens for a bending test from the bottom and side surfaces of the molded product.

The content of reinforcing fiber which constitutes the layer 1 must lie within a range of from 30 to 90% by weight. When the content of the reinforcing fiber is smaller than 30% by weight, the fiber-reinforced sheet molding compound makes it difficult to obtain fiber-reinforced plastic molded products having increased strength. When the content of the reinforcing fiber is greater than 90% by weight, on the other hand, the fiber-reinforced sheet molding compound loses the moldability to a striking degree.

Examples of the matrix resin include thermosetting resins such as unsaturated polyester resins, diallyl phthalate, epoxy resins, phenolic resins, and the products thereof of the B-stage, and thermoplastic resins such as polyamides, polyesters, polybutylene terephthalate, polysulfones, polyether sulfones, polycarbonates, ABS resins, and the like. From the standpoint of handling, however, the matrix resin should be capable of forming a film-like product at normal temperature.

Sheet molding compound which consists only of layer 1 lacks some flowability during the step of heating, which makes it difficult to obtain plastic molded products maintaining high molding precision.

The layer 2 made of a resin composition containing reinforcing fibers and fillers in amounts up to 30% by weight and having a thickness smaller than that of the layer 1, is joined to at least one surface of the layer 1, thereby strikingly increasing the flowability of the reinforcing fibers in the sheet molding compound during the step of molding.

The amount of fiber contained in the layer 2 is preferably smaller than 30% by weight. Sheet prepared from a matrix resin composition containing fiber in amount in excess of 30% by weight, decreases the flowability when it is being heated.

The layer 2 should have a thickness smaller than that of the layer 1. In a sheet molding compound having a layer 2 of a large thickness, the reinforcing fibers in the layer 2 do not uniformly flow into every area of the metal mold, which makes it difficult to produce fiber reinforced plastic molded products containing the reinforcing fibers at a uniform density. Using a sheet molding compound having a layer 2 of large thickness, furthermore, the fibers tend to appear on the surfaces at the portions where the reinforcing fibers are contained at high densities, and spoil the appearance of the molded products.

The layer 2 must be joined to at least one surface of the layer 1. In particular, when the layer 2 is joined to both surfaces of layer 1, the sheet molding compound exhibits improved handling and makes it possible to produce molded products having good appearance on all sides.

The sheet molding compound of the present invention exhibits good moldability despite its large content of reinforcing fibers as compared with the similar sheet molding compounds which have been developed so far. When it is molded under the application of heat and pressure to produce molded products, the reinforcing fibers do not appear on the surfaces of the molded products. The reinforcing fibers are uniformly oriented and are allowed to flow into every corner of the molded products of even complicated shapes. Consequently, the sheet molding compound of the present invention makes it possible to obtain molded products having very increased strength.

The sheet molding compound of the present invention can be effectively used for producing fiber-reinforced plastic molded products of complicated shapes, such as fishing reels, gears, microphone cases, any machine parts, reinforcing members, artificial teeth, dental plates, and the like.

The invention will now be explained below in further detail with reference to working examples.

Example 1

A semi-hardened (B-stage) prepreg sheet containing 37.5% by weight of a thermosetting resin was prepared by impregnating a sheet of a carbon fiber, oriented in one direction, with an epoxy resin, and adjusting the thickness of the sheet using a die followed by heating. Elongated chips of a width of 5 mm and a length of 6 mm cut from the prepreg sheet were remolded in a random fashion, and were treated in a press to prepare a sheet member (A) of a thickness of 0.16 mm containing 37.5% by weight of the resin.

On the other hand, the epoxy resin used for preparing the sheet member (A) was formed into a sheet on a parting tape, and was treated with heat to prepare a sheet member (B) composed of a semi-hardened (B-stage) thermosetting resin having a thickness of 0.03 mm.

A sheet member (B) was placed on each side of sheet member (A), and the sheets were adhered with pressure using nip rollers, to prepare a fiber-reinforced composite sheet molding compound of the present invention.

The sheet molding compound was charged into a metal mold, and was molded at 130°C under the pressure of 70 kg/cm$^2$ (68.6×10$^5$ Pa) for 1 hour to prepare a molded product. The thus molded product exhibited smooth surfaces. Five test pieces each measuring 2 mm in thickness, 10 mm in width and 100 mm in length, were cut out from the molded product, and were subjected to the bending test using Tensilon (Trade Mark), Model UTM-III, manufactured by Toyo Baudwin Co. under the conditions of a span of 80 mm and a cross-head speed of 2 mm per minute. The molded product exhibited excellent properties; 2.5 t/mm$^2$ in average bending modulus of elasticity, and 20 kg/mm$^2$ in bending strength.

Using the sheet member (A) only, on the other hand, a molded product was prepared in the same manner as above. The molded products contained numerous voids in the surfaces, and exhibited poor appearance and varying properties.

Further, a fiber-reinforced composite sheet material (C) was prepared in the same manner as mentioned above but using sheet members of a thickness of 0.17 mm composed of the same materials as the sheet members (A) and (B), instead of the sheet member (A) and the sheet member (B), and a molded product was prepared in the same manner as mentioned above. Surfaces of the product flew during the step of molding, and it was impossible to produce a molded product having good appearance. Further, a disorderly state took place in the layer of the fiber-reinforced sheet (A), and a lot of difficulty was encountered before obtaining a product having uniform properties.

The sheet molding compound prepared according to the present invention was introduced into a square metal mold of a depth of 20 mm and a length of 100 mm without having a cover to prepare a box-shaped molded product under the same conditions as mentioned above. A molded product was obtained having rich surface smoothness and suitable rigidity.

Example 2

A sheet molding compound was prepared in the same manner as in Example 1 with the exception that a cut carbon fiber was mixed in an amount of 10% by weight with respect to the resin to prepare a sheet member of a thickness of 0.035 mm, and using the thus prepared sheet member in place of the sheet member (B) of Example 1. The sheet material was molded in the same manner as in Example 1. The molded product exhibited excellent surface smoothness and rigidity.

Example 3

A prepreg sheet containing 35% by weight of resin was prepared by using a glass fiber strand (Glasron, Trade Mark, R 730, a product of Asahi Fiber Glass Co.) in place of the sheet consisting of the oriented carbon fiber of Example 1. A sheet member was prepared from the thus obtained prepreg sheet. By using the sheet member instead of the sheet member (A), a sheet molding compound was prepared in the same manner as in Example 1. Then, a molded product was obtained in the same manner as in Example 1. The molded product exhibited a bending modulus of elasticity of 1.3 t/mm$^2$ and smooth surfaces.

Example 4

A mixture consisting of 75 parts of a diallyl phthalate prepolymer (softening point 80°C, an iodine value 60), 25 parts of a diallyl phthalate monomer, 1.5 parts by weight of a tertiary butyl perbenzoate, and 1 part by weight of a parting agent, was used as a resin. A 10,000 filament tow of the carbon fiber was impregnated with 33% of the resin and was spread to a width of 10 mm. It was then cut to form chips of a length of 25 mm, which were arrayed in a random fashion on a plane support, and were molded together under the application of pressure to prepare a sheet of a thickness of 0.2 mm. The sheet was then sandwiched between films of the same resin of 0.1 mm thickness via parting papers which were placed on the upper and lower surfaces of the composite sheet. The laminate was then compressed by rubber rollers to obtain a sheet molding compound.

The sheet molding compound was charged into a metal mold and was molded at 150°C under a pressure of 70 kg/cm$^2$ for 10 minutes. The resulting molded product exhibited smooth surfaces. Test pieces of 10 mm width and 100 mm length were taken out from the molded product (which had a thickness of 2 mm) and were subjected to the bending test of Example 1. An average bending modulus of elasticity of 2 tonnes/mm$^2$ and a bending strength of 20 kg/mm$^2$ were obtained.

Example 5

A prepreg consisting of carbon fiber oriented in one direction and an epoxy resin, having a resin content of 37.5% and a thickness of 0.15 mm, was cut into pieces 10 mm in width and 25 mm in length. The pieces were arrayed in a random fashion between separately prepared films made of the same resin, to prepare a reinforced unhardened plastic material having a resin content of 50%. The unhardened material was supplied in a required amount into a metal mold for producing a spool which is a reel part, and was molded under the pressure of 70 kg/cm$^2$ at a hardening temperature of 150°C for 15 minutes. The molded product exhibited very smooth surfaces faithful to the metal mold. To test the strength of the molded product, a fishing gut No. 5 was fully wound on the spool under the tension of 1 kg weight. The spool was not broken, or was not deformed, either.

Here the spool was prepared by using the metal mold of the same size as that of the spool (made of aluminium) of a commercially available spinning reel. The weight of the aluminium spool was 70.6 g, while that of the reinforced plastic spool was 40.0 g.

Example 6

A prepreg consisting of carbon fiber oriented in one direction and an unsaturated polyester resin composed of diallyl phthalate prepolymer, diallyl phthalate monomer, tertiary butyl perbenzoate and zinc stearate at a weight ratio of 85/15/3/1, having a resin content of 37.5% and a thickness of 0.15 mm, was cut into pieces of a width of 10 mm and a length of 25 mm. The pieces were arrayed in a random fashion between separately prepared films made of the same resin to prepare an unhardened reinforced plastic material having a resin content of 50%. The unhardened reinforced plastic material was supplied into a metal mold for preparing a spool, and was molded under a pressure of 70 kg/cm$^2$ at 130°C for 15 minutes to prepare a spool having smooth surfaces. The spool was tested for its strength in the same manner as in Example 5, and there was no problem. The spool also weighed 40 g.

Example 7

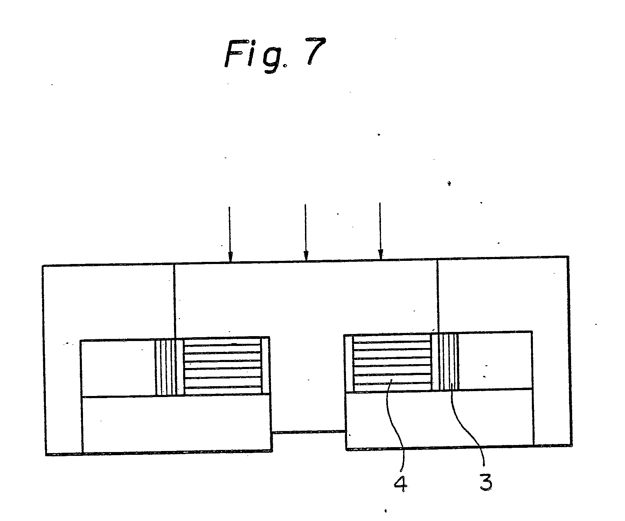

A prepreg consisting of a satin cloth made of carbon fiber impregnated with an epoxy resin in an amount of 37.5% and having a thickness of 0.45 mm was cut to a width equal to the thickness of a spur gear, to form an intermediate product of the form of a corrugated draining board having protruded and recessed portions in a number equal to the number of teeth, as shown in Fig. 5. Then, carbon fiber impregnated with the epoxy resin in an amount of 37.5% formed into cut chips which were arrayed in a random fashion on separately prepared unhardened film made of the epoxy resin so that the total amount of the resin was 50%. The thus prepared sheet molding compound was cut into discs having a hole, the discs were laminated as shown in Fig. 6. The laminate was mounted within the intermediate product, and the assembly was introduced into a metal mold heated at 150°C, and was molded under the pressure of 150 kg/cm$^2$ (147.1×10$^5$/Pa) or greater exerted from the upper direction as shown in Fig. 7 for 30 minutes to prepare a gear. The molded product exhibited smooth surfaces maintaining sizes equal to that of the metal mold.

## Claims

1. A fiber-reinforced plastic sheet molding compound comprising a first layer (1) formed of remolded rectangular or triangular chips (3) of a width of 1 mm or more and a length of 3 mm or more, the chips (3) being composed of from 30 to 90% by weight of reinforcing fibers and 70 to 10% by weight of a matrix resin, said first layer (1) being joined on one or both sides with a second layer (2) composed of the same matrix resin and of from 0 to 30% by weight of cut reinforcing fibers, the thickness of the second layer (2) being less than that of the first layer (1).

2. A sheet molding compound according to claim 1, wherein the rectangular or triangular chips have a width of from 1 to 30 mm and a length of from 5 to 50 mm.

3. A sheet molding compound according to any preceding claim, wherein the reinforcing fibers comprise carbon fibers.

4. A sheet molding compound according to any preceding claim, wherein a thermosetting resin is used as the matrix resin.

5. A sheet molding compound according to claim 4, wherein a B-stage epoxy resin is used as the thermosetting resin.

6. A sheet molding compound according to claim 4, wherein a resin of the type of diallyl phthalate is used as the thermosetting resin.

7. A sheet molding compound according to any of claims 1 to 3, wherein a hot melt-type thermosetting resin is used as the matrix resin.

## Revendications

1. Composé de moulage en feuille, en matière plastique renforcée par des fibres, comprenant une première couche (1) formée de paillettes rectangulaires ou triangulaires remoulées (3) ayant une largeur de 1 mm ou plus et une longueur de 3 mm ou plus, les paillettes (3) étant composées de 30 à 90% en poids de fibres de renforcement et de 70 à 10% en poids d'une résine de matrice, ladite première couche (1) étant liée par l'un des ses côtés ou par les deux à une seconde couche (2) composée de la même résine de matrice et de 0 à 30% en poids de fibres fragmentées de renforcement, l'épaisseur de la seconde couche (2) étant inférieure à celle de la première couche (1).

2. Composé de moulage en feuille selon la revendication 1, dans lequel les paillettes rectangulaires ou triangulaires ont de 1 à 30 mm de largeur et de 5 à 50 mm de longueur.

3. Composé de moulage en feuille selon l'une quelconque des revendications précédentes, dans lequel les fibres de renforcement comprennent des fibres de carbone.

4. Composé de moulage en feuille selon l'une quelconque des revendications précédentes, dans lequel on utilise une résine thermodurcissable comme résine de matrice.

5. Composé de moulage en feuille selon la revendication 4, dans lequel on utilise une résine époxy à l'état B comme résine thermodurcissable.

6. Composé de moulage en fueille selon la revendication 4, dans lequel on utilise comme résine thermodurcissable une résine du type phtalate de diallyle.

7. Composé de moulage en feuille selon l'une quelconque des revendications 1 à 3, dans lequel on utilise comme résine de matrice une résine thermodurcissable du type fondant à chaud.

**Patentansprüche**

1. Folienförmige Formmasse aus faserverstärktem Kunststoff mit einer ersten Schicht (1), die aus umgeformten rechteckigen oder dreieckigen Stückchen (3) mit einer Breite von 1 mm oder mehr und einer Länge von 3 mm oder mehr gebildet ist, wobei die Stückchen (3) aus 30 bis 90 Gew.-% Verstärkungsfasern und 70 bis 10 Gew.-% eines Matrixharzes bestehen und die erste Schicht (1) an einer Seite oder beiden Seiten mit einer zweiten Schicht (2), die aus dem gleichen Matrixharz und 0 bis 30 Gew.-% geschnittenen Verstärkungsfasern besteht, verbunden ist, wobei die Dicke der zweiten Schicht (2) geringer ist als die Dicke der ersten Schicht (1).

2. Folienförmige Formmasse nach Anspruch 1, bei der die rechteckigen oder dreieckigen Stückchen eine Breite von 1 bis 30 mm und eine Länge von 5 bis 50 mm haben.

3. Folienförmige Formmasse nach einem der vorhergehenden Ansprüche, bei der die Verstärkungsfasern aus Kohlenstoffasern bestehen.

4. Folienförmige Formmasse nach einem der vorhergehenden Ansprüche, bei der als Matrixharz ein hitzehärtbares Harz verwendet wird.

5. Folienförmige Formmasse nach Anspruch 4, bei der als hitzehärtbares Harz ein Epoxidharz im B-Zustand verwedent wird.

6. Folienförmige Formmasse nach Anspruch 4, bei der also hitzehärtbares Harz ein Harz des Diallylphthalattyps verwendet wird.

7. Folienförmige Formmasse nach einem der Ansprüche 1 bis 3, bei der als Matrixharz ein hitzehärtbares Harz des Heißschmelztyps verwendet wird.

Fig. 1

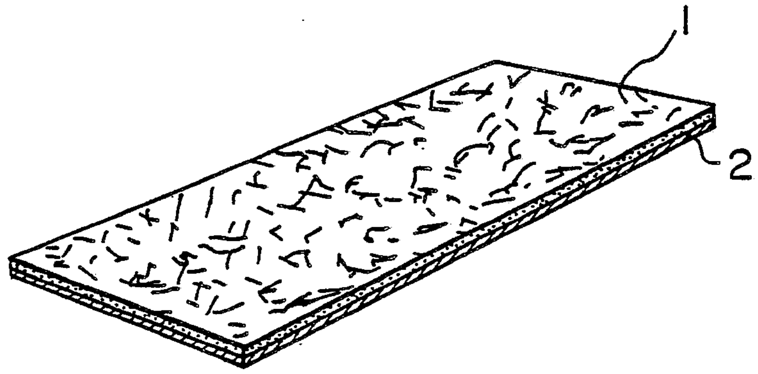


Fig. 2

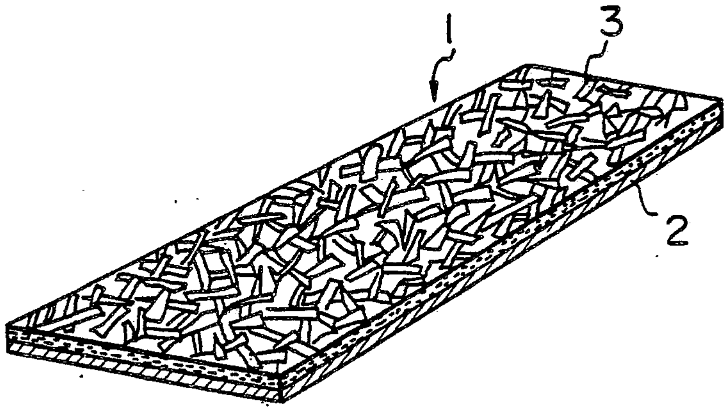

Fig. 3

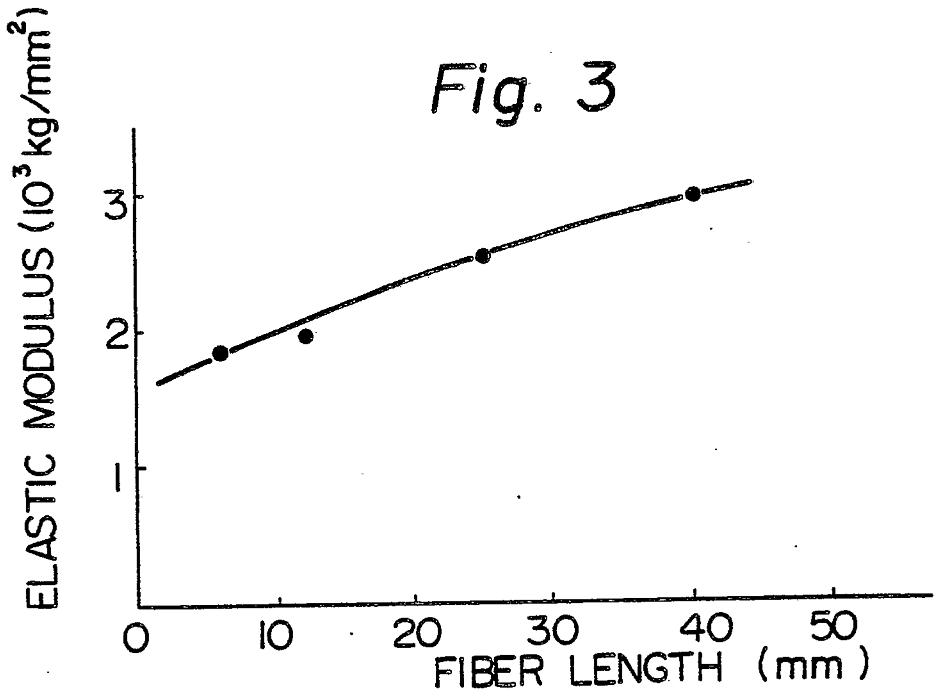
ELASTIC MODULUS ($10^3$ kg/mm$^2$)
3
2
1
0
10
20
30
40
50
FIBER LENGTH (mm)

Fig. 4

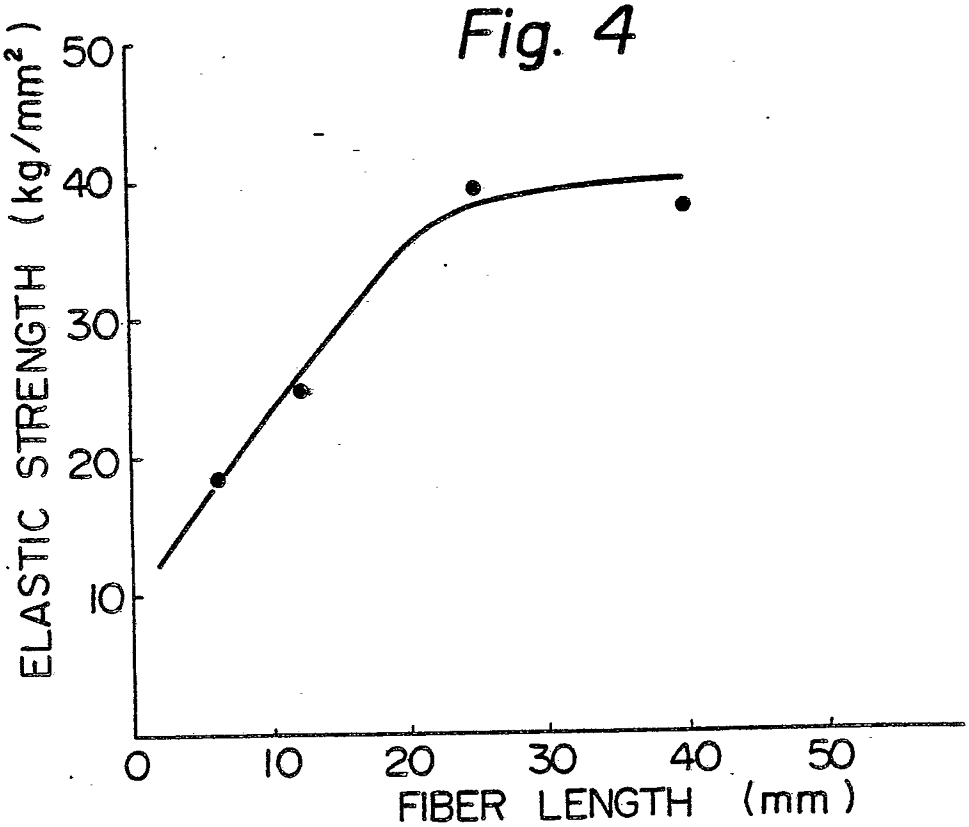
ELASTIC STRENGTH (kg/mm$^2$)
50
40
30
20
10
0
10
20
30
40
50
FIBER LENGTH (mm)

Fig. 5

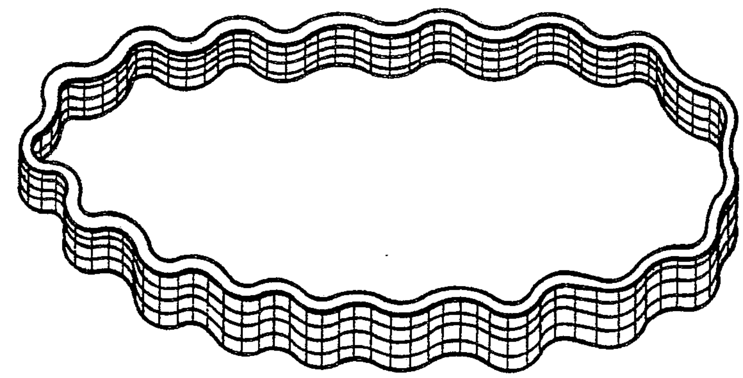

Fig. 6

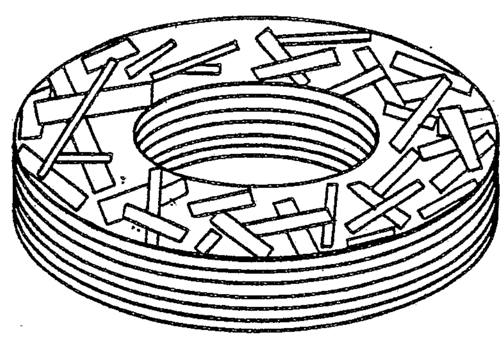

Fig. 7